# EUROPEAN PATENT APPLICATION

(11) **EP 3 360 940 A1**
(43) Date of publication of application: **15.08.2018**
(21) Application number: 16853703.3
(22) Date of filing: 06.10.2016
(51) Int. Cl.: C09J 7/00, B32B 17/10, B32B 27/00, C09J 11/06, C09J 129/14, G06F 3/041

(54) **INTERLAYER FILLER MATERIAL FOR TOUCH PANELS, AND TOUCH PANEL LAMINATE**

(30) Priority: 07.10.2015 JP 2015199738
(71) Applicant: Sekisui Chemical Co., Ltd., Osaka-shi, Osaka 530-0047 (JP)
(72) Inventor: FUKATANI, Juichi, Mishima-gun Osaka 618-0021 (JP); UENOMACHI, Kiyomi, Mishima-gun Osaka 618-0021 (JP); OKABAYASHI, Takazumi, Mishima-gun Osaka 618-0021 (JP); EBINA, Ryousuke, Mishima-gun Osaka 618-0021 (JP); WADA, Atsushi, Mishima-gun Osaka 618-0021 (JP)
(74) Representative: Cabinet Beau de Loménie
(86) International application number: PCT/JP2016/079811
(87) International publication number: WO 2017/061551

(57) **Abstract**

The present invention aims to provide an interlayer filling material for a touch panel which is used for filling an interlayer space between a touch panel and another component or an interlayer space between transparent conductive films included in the touch panel in production of a personal digital assistant, is excellent in followability to steps, and enables production of a touch panel laminate that is less likely to suffer cracks or breakage in a surface protection panel or a glass substrate. The present invention also aims to provide a touch panel laminate produced using the interlayer filling material for a touch panel. The present invention relates to an interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film, the interlayer filling material containing: a polyvinyl acetal; and a plasticizer, the interlayer filling material having a storage modulus G' (20°C) at 20°C of 1 × 10⁷ Pa or higher and a storage modulus G' (70°C) at 70°C of 3 × 10⁶ Pa or lower.

## Description

### TECHNICAL FIELD

The present invention relates to an interlayer filling material for a touch panel which is used for filling an interlayer space between a touch panel and another component or an interlayer space between transparent conductive films included in the touch panel in production of a personal digital assistant, is excellent in followability to steps, and enables production of a touch panel laminate that is less likely to suffer cracks or breakage in a surface protection panel or a glass substrate. The present invention also relates to a touch panel laminate produced using the interlayer filling material for a touch panel.

### BACKGROUND ART

Touch panels are used in various fields. In a personal digital assistant such as a smartphone or a tablet PC, a touch panel is placed below a surface protection panel made of glass or the like. Below the touch panel, a polarizing film and a display are provided in the stated order.

In such a personal digital assistant, for the purpose of improving the transparency, luminance, and contrast on the display screen to enhance the visibility, an interlayer space between the surface protection panel and the touch panel and an interlayer space between the touch panel and the polarizing film are filled with a filling material that has a smaller difference in refractive index with these members than air does.

As interlayer filling materials for a touch panel, acrylic adhesives are often used from the standpoint of transparency, adhesiveness, and coating properties (see Patent Literature 1, for example).

A touch panel laminate produced using an acrylic adhesive as an interlayer filling material, however, tends to have cracks or breakage in a surface protection panel or a glass substrate. Along with the recent trend of downsizing, thinning, or weight reduction of a personal digital assistant, thinning of a surface protection panel, a glass substrate, and a filling material has been promoted. Such a thin touch panel laminate, however, is more likely to have cracks or breakage.

### CITATION LIST

### - Patent Literature

Patent Literature 1: JP 2011-74308 A

### SUMMARY OF INVENTION

### - Technical Problem

The present invention aims to, in consideration of the state of the art, provide an interlayer filling material for a touch panel which is used for filling an interlayer space between a touch panel and another component or an interlayer space between transparent conductive films included in the touch panel in production of a personal digital assistant, is excellent in followability to steps, and enables production of a touch panel laminate that is less likely to suffer cracks or breakage in a surface protection panel or a glass substrate. The present invention also aims to provide a touch panel laminate produced using the interlayer filling material for a touch panel.

### - Solution to problem

The present invention relates to an interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film, the interlayer filling material containing: a polyvinyl acetal; and a plasticizer, the interlayer filling material having a storage modulus G' (20°C) at 20°C of 1 × 10⁷ Pa or higher and a storage modulus G' (70°C) at 70°C of 3 × 10⁶ Pa or lower.

The present invention is specifically described in the following.

The present inventors intensively studied about the cause of cracks or breakage in a surface protection panel or a glass substrate upon application of impact on a touch panel. Surface protection panels and glass substrates used in touch panels essentially have very high strength and therefore are less likely to have cracks or breakage by dropping impact. As a result of intensive studies, the present inventors found out that a conventional interlayer filling material for a touch panel prepared from an acrylic adhesive is deformed on impact, due to its low toughness or flexural stiffness, to cause a flexure in a surface protection panel or a glass substrate, which results in cracks or breakage in the surface protection panel or the glass substrate. The present inventors also considered the use of an acrylic adhesive exhibiting a high modulus of elasticity owing to its high degree of crosslinking. An acrylic adhesive having an enhanced modulus of elasticity however has poor adhesion force to glass or suffers significant cure shrinkage.

To overcome the situation, the present inventors considered the use of a polyvinyl acetal, as an alternative to conventionally widely used acrylic adhesives, for an interlayer filling material for a touch panel. Polyvinyl acetal has high toughness and flexural stiffness and also has excellent properties of high adhesiveness to glass or the like. Accordingly, the use of a polyvinyl acetal as an interlayer filling material is expected to prevent occurrence of cracks or breakage in the surface protection panel or glass substrate. Moreover, even when the personal digital assistant is broken on impact of a fall, prevention of scattering of glass fragments or the like can be expected. However, since polyvinyl acetal is solid at a normal temperature at around 20°C, disadvantageously, followability to steps such as steps at decorative printing portions or wiring upon filling of interlayer spaces (upon attachment thereof) is not sufficient.

As a result of further intensive studies, the present inventors found that control of the storage modulus G' at 20°C and 70°C of an interlayer filling material for a touch panel containing a polyvinyl acetal and a plasticizer enables preparation of an interlayer filling material for a touch panel which is excellent in followability to steps and can provide a touch panel laminate that is less likely to suffer cracks or breakage in a surface protection panel or a glass substrate. The present invention was thus completed.

The interlayer filling material for a touch panel of the present invention is used for filling an interlayer space between a touch panel and another component or an interlayer space between transparent conductive films included in the touch panel. Another component mentioned above is not particularly limited, and is preferably a surface protection panel (e.g., a glass sheet, a polycarbonate sheet, an acrylic sheet) or a polarizing film. In other words, the interlayer filling material for a touch panel of the present invention is preferably used for filling an interlayer space between a surface protection panel and a touch panel and/or an interlayer space between the touch panel and a polarizing film.

The interlayer filling material for a touch panel of the present invention has a storage modulus G' (20°C) at 20°C of 1 × 10⁷ Pa or higher. With the storage modulus G' (20°C) of 1 × 10⁷ Pa or higher, the interlayer filling material for a touch panel is less likely to be deformed on impact, avoiding occurrence of a flexure to prevent cracks or breakage in the surface protection panel or glass substrate. The storage modulus G' (20°C) is preferably 2 × 10⁷ Pa or higher, more preferably 4 × 10⁷Pa or higher, particularly preferably 6 × 10⁷ Pa or higher.

In the case where the interlayer filling material for a touch panel of the present invention contains a reactive diluent and a photopolymerization initiator described later, the storage modulus G' (20°C) refers to a storage modulus G' (20°C) after irradiation with light.

The interlayer filling material for a touch panel of the present invention preferably has a loss tangent tanδ (25°C) at 25°C of 0.6 or lower. With the loss tangent tanδ (25°C) of 0.6 or lower, the interlayer filling material for a touch panel is further less likely to be deformed on impact, further avoiding occurrence of a flexure to prevent cracks or breakage in the surface protection panel or glass substrate. The loss tangent tanδ (25°C) is preferably 0.4 or lower, more preferably 0.2 or lower, particularly preferably 0.1 or lower.

The interlayer filling material for a touch panel of the present invention has a storage modulus G' (70°C) at 70°C of 3 × 10⁶ Pa or lower. With the storage modulus G' (70°C) of 3 × 10⁶ Pa or lower, the interlayer filling material for a touch panel pressure-bonded under heating at around 70°C can sufficiently follow steps at decorative printing portions or wiring, thereby removing bubbles remaining at the borders of the steps. The storage modulus G' (70°C) is preferably 1 × 10⁶ Pa or lower, more preferably 7 × 10⁵ Pa or lower, particularly preferably 5 × 10⁵ Pa or lower.

The storage modulus and loss tangent can be measured using a dynamic viscoelastometer such as ARES-G2 (TA Instruments) or DVA-200 (IT Measurement Co., Ltd.) under the condition that the temperature is lowered from 100°C to -25°C at a temperature decreasing rate of 3°C/min and under the conditions of a frequency of 1 Hz and a strain of 1%.

The interlayer filling material for a touch panel of the present invention contains a polyvinyl acetal and a plasticizer. Adjustment of the type of the polyvinyl acetal and the amount of the plasticizer enables control of the storage modulus G' (20°C) and the storage modulus G' (70°C) within desired ranges.

The polyvinyl acetal can be prepared by saponifying polyvinyl acetate to prepare polyvinyl alcohol and then acetalizing the polyvinyl alcohol with an aldehyde in the presence of a catalyst. The degree of saponification of the polyvinyl alcohol is not particularly limited, and is commonly within a range of 70 to 99.9 mol%, preferably 70 to 99.8 mol%, more preferably 80 to 99.8 mol%.

The average degree of polymerization of the polyvinyl alcohol is not particularly limited. Since a higher-molecular-weight polyvinyl acetal is preferred from the standpoint of further excellent toughness or flexural stiffness, polyvinyl alcohol used preferably has a higher average degree of polymerization. The lower limit of the average degree of polymerization of the polyvinyl alcohol is preferably 100 and the upper limit thereof is preferably 4,000. With the average degree of polymerization of less than 100, the polyvinyl acetal may have lower toughness or flexural stiffness, failing to exert a sufficient effect of preventing cracks or breakage. With the average degree of polymerization of more than 4,000, the solution viscosity of the polyvinyl alcohol upon acetalization may be excessively high, making the acetalization difficult. Also, the resulting interlayer filling material for a touch panel may have lower application properties. The lower limit of the average degree of polymerization is more preferably 150 and the upper limit thereof is more preferably 3,500. The lower limit is still more preferably 200 and the upper limit is still more preferably 3,000.

The average degree of polymerization of the polyvinyl alcohol as used herein refers to a viscosity average degree of polymerization obtained based on JIS K6726:1994. In a case where the polyvinyl alcohol resin used is a mixture of two or more types of polyvinyl alcohol resins, the average degree of polymerization of the polyvinyl alcohol refers to an apparent viscosity average degree of polymerization of the whole polyvinyl alcohol resin mixture.

For acetalization of the polyvinyl alcohol with an aldehyde in the presence of a catalyst, a solution containing the polyvinyl alcohol may be used. An exemplary solvent used for the solution containing the polyvinyl alcohol is water.

The aldehyde is not particularly limited. Commonly, a C1-C10 aldehyde is favorably used.

The C1-C10 aldehyde is not particularly limited, and may be either a linear aldehyde or a branched aldehyde. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, preferred are n-butyraldehyde, n-hexylaldehyde, and n-valeraldehyde, and more preferred is n-butyraldehyde. These aldehydes may be used alone or in combination of two or more thereof.

In other words, the polyvinyl acetal preferably contains polyvinyl butyral (when the aldehyde is n-butyraldehyde, the polyvinyl acetal is referred to as polyvinyl butyral). The use of the polyvinyl butyral allows the interlayer filling material for a touch panel to exhibit appropriate adhesion force to glass, leading to better light resistance and weather resistance. Two or more types of polyvinyl acetals may be optionally used in combination.

The lower limit of the content rate of hydroxy groups (hydroxy group content) of the polyvinyl acetal is preferably 16 mol% and the upper limit thereof is preferably 45 mol%. When the hydroxy group content is 16 mol% or more, the adhesion force of the interlayer filling material for a touch panel to glass is improved. When the hydroxy group content is 45 mol% or less, the moisture resistance and weather resistance are improved. The lower limit of the hydroxy group content is more preferably 18 mol%, still more preferably 20 mol%, particularly preferably 22 mol%. The upper limit thereof is more preferably 40 mol%, still more preferably 38 mol%, further preferably 36 mol%, particularly preferably 35 mol%.

The hydroxy group content of the polyvinyl acetal is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined, for example, by the method in conformity with JIS K6728 "Testing methods for polyvinyl butyral".

The lower limit of the degree of acetylation (acetyl group content) of the polyvinyl acetal is preferably 0.1 mol% and the upper limit thereof is preferably 30 mol%. When the acetyl group content is 0.1 mol% or more, the compatibility with the reactive diluent is enhanced. When the acetyl group content is 30 mol% or less, the moisture resistance of the polyvinyl acetal is improved. When the acetyl group content is more than 30 mol%, the reaction efficiency during the production of the polyvinyl acetal may be lowered. The lower limit of the acetyl group content is more preferably 0.2 mol%, still more preferably 0.3 mol%. The upper limit thereof is more preferably 24 mol%, still more preferably 20 mol%, further preferably 19.5 mol%, particularly preferably 15 mol%.

The acetyl group content of the polyvinyl acetal is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain. The amount of ethylene groups to which acetal groups are bonded can be determined, for example, in conformity with JIS K6728 "Testing methods for polyvinyl butyral".

The acetyl group content of the polyvinyl acetal is controlled within the above range, for example, by adjusting the degree of saponification of the polyvinyl alcohol. In other words, the acetyl group content of the polyvinyl acetal depends on the degree of saponification of the polyvinyl alcohol. In the case where the polyvinyl alcohol used has a lower degree of saponification, the acetyl group content of the polyvinyl acetal is increased. By contrast, in the case where the polyvinyl alcohol used has a higher degree of saponification, the acetyl group content of the polyvinyl acetal is reduced.

The lower limit of the degree of acetalization of the polyvinyl acetal is preferably 50 mol% and the upper limit thereof is preferably 85 mol%. When the degree of acetalization is 50 mol% or higher, the compatibility with the reactive diluent is enhanced. When the degree of acetalization is 85 mol% or lower, the reaction time needed for the production of the polyvinyl acetal can be shortened. The lower limit of the degree of acetalization is more preferably 54 mol%, still more preferably 58 mol%, particularly preferably 60 mol%. The upper limit of the degree of acetalization is more preferably 82 mol%, still more preferably 79 mol%, particularly preferably 77 mol%.

The degree of acetalization of the polyvinyl acetal is a value in percentage of the mole fraction (mol%) obtained by dividing the amount of ethylene groups to which acetal groups are bonded by the total amount of ethylene groups of the main chain. The degree of acetalization can be determined by measuring the acetyl group content and the vinyl alcohol content (content rate of hydroxy groups) by the method in conformity with JIS K6728 "Testing methods for polyvinyl butyral", calculating the mole fractions based on the measurement results, and subtracting the acetyl group content and the vinyl alcohol content from 100 mol%.

The degree of acetalization of the polyvinyl acetal can be controlled, for example, by adjusting the amount of the aldehyde. When the amount of the aldehyde is smaller, the degree of acetalization of the polyvinyl acetal is lowered. When the amount of the aldehyde is larger, the degree of acetalization of the polyvinyl acetal is increased.

The plasticizer is not particularly limited and a conventionally known plasticizer usable for polyvinyl acetals may be used. Examples of the plasticizer include organic acid ester plasticizers such as monobasic organic acid esters and polybasic organic acid esters, and phosphoric acid plasticizers such as organophosphate plasticizers and organophosphite plasticizers. Preferred among these are organic acid ester plasticizers. These plasticizers may be used alone or in combination of two or more thereof. The plasticizer is preferably a liquid plasticizer.

The monobasic organic acid ester is not particularly limited, and examples thereof include glycol esters obtainable by reaction between a monobasic organic acid (e.g., butyric acid, isobutyric acid, caproic acid, 2-ethylbutyric acid, heptanoic acid, n-octylic acid, 2-ethylhexylic acid, pelargonic acid (n-nonylic acid), decylic acid) and a glycol (e.g., triethylene glycol, tetraethylene glycol, tripropylene glycol).

The polybasic organic acid ester is not particularly limited, and examples thereof include ester compounds obtainable by reaction between a polybasic organic acid (e.g., adipic acid, sebacic acid, azelaic acid) and a C4-C8 linear or branched alcohol.

The organic acid ester plasticizer is preferably a diester plasticizer represented by the following formula (1). The use of the diester plasticizer improves the moldability of the interlayer filling material for a touch panel.

R¹-CO-(-R³-O-)ₚ-CO-R² (1)

In the formula (1), R¹ and R² each represent a C5-C10 (preferably C6-C10) organic group, R³ represents an ethylene, isopropylene, or n-propylene group, and p represents an integer of 3 to 10.

Specific examples of the organic acid ester plasticizer include triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutyl carbitol adipate, ethylene glycol-di-2-ethylbutyrate, 1,3-propylene glycol-di-2-ethylbutyrate, 1,4-butylene glycol-di-2-ethylbutyrate, diethylene glycol-di-2-ethylbutyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicaprylate, dihexyl adipate, dioctyl adipate, hexylcyclohexyl adipate, diisononyl adipate, heptylnonyl adipate, oil-modified alkyd sebacate, mixtures of phosphoric acid esters and adipic acid esters, and mixed type adipic acid esters prepared from a C4-C9 alkyl alcohol and a C4-C9 cyclic alcohol.

The organophosphate plasticizers are not particularly limited, and examples thereof include tributoxyethyl phosphate, isodecylphenyl phosphate, and triisopropyl phosphate.

Among the plasticizers, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethyl butyrate (3GH), tetraethylene glycol-di-2-ethylbutyrate (4GH), tetraethylene glycol-di-n-heptanoate (4G7) and triethylene glycol-di-n-heptanoate (3G7). More preferred are triethylene glycol-di-2-ethylbutyrate, triethylene glycol-di-n-heptanoate (3G7), and triethylene glycol-di-2-ethylhexanoate (3GO), and still more preferred is triethylene glycol-di-2-ethylhexanoate.

The amount of the plasticizer is not particularly limited. The lower limit of the amount of the plasticizer relative to 100 parts by weight of the polyvinyl acetal is preferably 1 part by weight and the upper limit thereof is preferably 30 parts by weight. With the amount within this range, scattering of fragments in the case where the personal digital assistant is damaged can be sufficiently suppressed. The lower limit of the amount of the plasticizer is more preferably 4 parts by weight and the upper limit thereof is more preferably 20 parts by weight.

The interlayer filling material for a touch panel of the present invention preferably further contains a reactive diluent and a photopolymerization initiator. When the interlayer filling material for a touch panel containing a reactive diluent and a photopolymerization initiator is irradiated with light, the reactive diluent reacts to be crosslinked and cured, thereby increasing the storage modulus G' of the interlayer filling material for a touch panel. The storage modulus G' (20°C) and the storage modulus G' (70°C) of the interlayer filling material for a touch panel can be easily controlled within desired ranges by utilizing this reaction.

Specifically, the interlayer filling material for a touch panel containing a reactive diluent and a photopolymerization initiator is adjusted to have a storage modulus G' (70°C) of 3 × 10⁶ Pa or lower in a state of being not irradiated with light. In such a case, the interlayer filling material for a touch panel pressure-bonded under heating at around 70°C can sufficiently follow steps at decorative printing portions and wiring, thereby removing bubbles remaining at the borders of the steps. Then, the interlayer filling material is irradiated with light to react the reactive diluent, thereby crosslinking and curing the reactive diluent to set the storage modulus G' (20°C) to 1 × 10⁷ Pa or higher. Thus, a flexure on impact can be suppressed to prevent cracks or breakage in the surface protection panel or the glass substrate. Moreover, the reactive diluent reacted by irradiation with light does not remain in the interlayer filling material or bleed out therefrom.

The reactive diluent as used herein refers to an agent that is compatible with the polyvinyl acetal and molecules thereof react with each other by irradiation with light to be crosslinked and cured.

Examples of the reactive diluent include (meth)acrylic reactive diluents such as (meth)acrylic monomers and (meth)acrylic oligomers, epoxy reactive diluents such as epoxy monomers and epoxy oligomers, and silicone reactive diluents such as alkoxysilane monomers and alkoxysilane oligomers. These reactive diluents may be used alone or in combination of two or more thereof. Preferred among these are (meth)acrylic reactive diluents because they are highly compatible with the polyvinyl acetal and are easily crosslinked and cured when used in combination with a photopolymerization initiator.

The (meth)acrylic monomer used may be a monofunctional, bifunctional, or tri- or higher functional (meth)acrylic monomer.

Examples of the monofunctional (meth)acrylic monomer include methyl (meth)acrylate, ethyl (meth)acrylate, propyl (meth)acrylate, butyl (meth)acrylate, 2-hydroxyethyl (meth)acrylate, diethylene glycol monoethyl ether (meth)acrylate, isobornyl (meth)acrylate, 3-methoxybutyl (meth)acrylate, 2-acryloyloxyethyl-2-hydroxypropyl phthalate, and 2-methacryloyloxyethyl-2-hydroxylpropyl phthalate.

Examples of the bifunctional (meth)acrylic monomer include ethylene glycol di(meth)acrylate, diethylene glycol di(meth)acrylate, tetraethylene glycol di(meth)acrylate, 1,6-hexanediol dimethacrylate, 1,9-nonanediol diacrylate, polytetramethylene glycol di(meth)acrylate, neopentyl glycol di(meth)acrylate, 1,3-butylene glycol di(meth)acrylate, and 2,2-bis[4-(methacryloxyethoxy)phenyl]propane di(meth)acrylate.

Examples of the tri- or higher functional (meth)acrylic monomer include trimethylolpropane triacrylate, pentaerythritol triacrylate, pentaerythritol trimethacrylate, pentaerythritol tetramethacrylate, dipentaerythritol pentaacrylate, dipentaerythritol hexaacrylate, tri(2-acryloyloxy ethyl)phosphate, tetramethyrolmethane tri(meth)acrylate, tetramethylol propane tetra(meth)acrylate, triallyl isocyanurate, and derivatives thereof.

The above (meth)acrylic monomers may be used alone or in combination of two or more thereof. In particular, preferred are monofunctional (meth)acrylic monomers as they are particularly excellent in compatibility with the polyvinyl acetal. More specifically, preferred are methyl (meth)acrylate, ethyl (meth)acrylate, propyl (meth)acrylate, butyl (meth)acrylate, and 2-hydroxyethyl acrylate.

Examples of the (meth)acrylic oligomers include those including a plurality of the (meth)acrylic monomers bonded to each other. In particular, preferred is a (meth)acrylic oligomer prepared from the (meth)acrylic monomer mentioned above because such an oligomer is particularly excellent in compatibility with the polyvinyl acetal.

Examples of the epoxy monomers include: glycidyl ester epoxy monomers of bisphenol A type, bisphenol F type, bisphenol AD type, bromine-containing bisphenol A type, phenol novolac type, cresol novolac type, polyphenol type, linear aliphatic type, butadiene type, urethane type and the like; aliphatic glycidyl ester epoxy monomers such as glycidyl hexahydrophthalate, dimer glycidyl ester, aromatic type, cycloaliphatic type and like epoxy monomers; methyl-substituted epoxy monomers of bisphenol type, ester type, high-molecular-weight ether ester type, ether ester type, brominated type, novolac type, and the like; heterocyclic epoxy monomers; glycidyl amine epoxy monomers such as triglycidyl isocyanurate and tetraglycidyl diaminodiphenyl methane; linear aliphatic epoxy monomers such as epoxylated polybutadiene and epoxy soybean oil; cycloaliphatic epoxy monomers; naphthalene novolac-type epoxy monomers; and diglycidyl oxynaphthalene epoxy monomers.

Examples of the epoxy oligomers include those including a plurality of the epoxy monomers bonded to each other. Preferred among these are epoxy oligomers prepared from the epoxy monomers mentioned above.

Examples of the alkoxysilane monomers include methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltrimethoxysilane, decyltrimethoxysilane, and 1,6-bis(trimethoxysilyl)hexane.

Examples of the alkoxysilane oligomers include those including a plurality of the alkoxysilane monomers bonded to each other. Preferred among these are alkoxysilane oligomers prepared from the alkoxysilane monomers mentioned above.

The amount of the reactive diluent in the interlayer filling material for a touch panel of the present invention is not particularly limited. The lower limit of the amount of the reactive diluent relative to 100 parts by weight of the polyvinyl acetal is preferably 0.1 parts by weight and the upper limit thereof is preferably 30 parts by weight. The amount of the reactive diluent within the above range facilitates control of the storage modulus G' (70°C) of the interlayer filling material for a touch panel before the reaction of the reactive diluent and the storage modulus G' (20°C) of the interlayer filling material for a touch panel after the reaction of the reactive diluent within desired ranges. The lower limit of the amount of the reactive diluent is more preferably 1.0 part by weight and the upper limit thereof is more preferably 20.0 parts by weight. The lower limit is still more preferably 2.0 parts by weight and the upper limit is still more preferably 15.0 parts by weight. The lower limit is particularly preferably 3.0 parts by weight and the upper limit is particularly preferably 10.0 parts by weight.

The photopolymerization initiator may be appropriately selected in accordance with the type of the reactive diluent. In the case where a (meth)acrylic reactive diluent is used as the reactive diluent, for example, a persulfate, an organic peroxide, an azo compound, or the like may be used. These photopolymerization initiators may be used alone or in combination of two or more thereof.

The amount of the photopolymerization initiator in the interlayer filling material for a touch panel of the present invention is not particularly limited. The lower limit thereof is preferably 0.01 parts by weight and the upper limit thereof is preferably 5 parts by weight, relative to 100 parts by weight of the reactive diluent. When the amount of the photopolymerization initiator is within this range, the reactive diluent can be reacted surely and in a short time. Moreover, bleeding of the residual photopolymerization initiator is not likely to occur. The lower limit of the amount of the photopolymerization initiator is more preferably 0.1 parts by weight and the upper limit thereof is more preferably 2 parts by weight.

The interlayer filling material for a touch panel containing the reactive diluent and the photopolymerization initiator may be irradiated with light by any method. In an exemplary method, an ultraviolet light irradiation device such as an ultra-high pressure mercury lamp is used for irradiation with light.

The wavelength or illuminance of the light used in the irradiation may be appropriately determined in accordance with the types of the reactive diluent and the photopolymerization initiator or the like. For example, when the reactive diluent used is a (meth)acrylic reactive diluent and the photopolymerization initiator used is benzophenone in an amount of 0.5 to 2 parts by weight relative to 100 parts by weight of the reactive diluent, preferred is irradiation with light having a wavelength of 365 nm at a dose of 2,000 to 6,000 mJ/cm².

The interlayer filling material for a touch panel of the present invention may contain, if needed, known additives such as an adhesion modifier, a tackifier resin, a plasticizer, an emulsifier, a softener, fine particles, a filler agent, a pigment, a dye, a silane coupling agent, an antioxidant, a surfactant, and wax to the extent that would not lower the transparency.

The interlayer filling material for a touch panel of the present invention may be produced by any method. An exemplary method includes mixing the polyvinyl acetal, reactive diluent, photopolymerization initiator, and optionally used additives.

The application of the interlayer filling material for a touch panel of the present invention is not particularly limited, and may be used as a bonding (adhesive) sheet for various applications. Specifically, for example, the interlayer filling material for a touch panel of the present invention is preferably used for at least one interlayer space selected from the group consisting of an interlayer space between a surface protection panel and a touch panel, an interlayer space between the touch panel and a polarizing film, and interlayer spaces included in the touch panel between transparent conducive films, between a glass sheet and one of the transparent conducive films, between a glass sheet and another glass sheet, between a glass sheet and a polarizing film, between a substrate and a glass sheet, between a substrate and one of the transparent conducive films, and between a substrate and a polarizing film in a personal digital assistant (e.g., smartphones, tablet PCs) or a flat-type or flexible-type image display device (e.g., electronic paper, PDAs, TVs, game machines) including an image display panel such as LCD, EL, or PDP. Adherends can be directly bonded to be fixed using the interlayer filling material for a touch panel of the present invention.

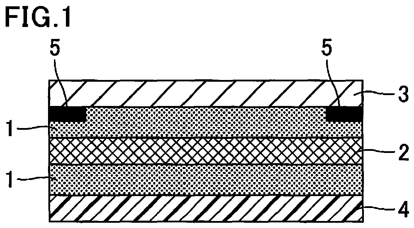

Fig. 1 is a cross-sectional view schematically illustrating an exemplary application of the interlayer filling material for a touch panel of the present invention. In Fig. 1, the interlayer space between a surface protection panel 3 and a touch panel 2 and the interlayer space between the touch panel 2 and a polarizing film 4 are filled with the interlayer filling material for a touch panel 1 of the present invention.

In Fig. 1, decorative printing portions 5 are formed at the periphery on the rear side of the surface protection panel 3 for the purpose of masking or the like, and the interlayer filling material for a touch panel 1 of the present invention sufficiently follows steps formed by such decorative printing portions 5 and steps (not illustrated) of the wiring formed in the touch panel 2.

The present invention also encompasses a touch panel laminate including: a touch panel including transparent conductive films; and the interlayer filling material for a touch panel of the present invention, the interlayer filling material for a touch panel filling at least one interlayer space selected from the group consisting of an interlayer space between a surface protection panel and the touch panel, an interlayer space between the touch panel and a polarizing film, and interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film.

The surface protection panel is not particularly limited, and may be one commonly used for personal digital assistants, flat-type or flexible-type image display devices, or the like, such as a glass sheet, a polycarbonate sheet, or an acrylic sheet.

The touch panel is not particularly limited, and may be one commonly used for personal digital assistants, flat-type or flexible-type image display devices, or the like, such as a touch panel including a plurality of layers (e.g., ITO film). The configuration of the touch panel is not particularly limited, and examples thereof include the out-cell type, in-cell type, on-cell type, cover glass-integrated type, and cover sheet-integrated type.

The system of the touch panel is also not particularly limited, and examples thereof include the resistive film type, capacitive type, optical type, and ultrasonic type.

The polarizing film is also not particularly limited, and may be one commonly used for personal digital assistants, flat-type or flexible-type image display devices, or the like.

The method for producing a laminate by filling at least one interlayer space selected from the group consisting of an interlayer space between a surface protection panel and a touch panel, an interlayer space between the touch panel and a polarizing film, and an interlayer space between transparent conductive films included in the touch panel, with the interlayer filling material for a touch panel of the present invention is not particularly limited, and a conventionally known method may be employed.

### - Advantageous Effects of Invention

The present invention can provide an interlayer filling material for a touch panel which is used for filling an interlayer space between a touch panel and another component or an interlayer space between transparent conductive films included in the touch panel in production of a personal digital assistant, is excellent in followability to steps, and enables production of a touch panel laminate that is less likely to suffer cracks or breakage in a surface protection panel or a glass substrate. The present invention can also provide a touch panel laminate produced using the interlayer filling material for a touch panel.

### BRIEF DESCRIPTION OF DRAWINGS

Fig. 1 is a cross-sectional view schematically illustrating an exemplary application of the interlayer filling material for a touch panel of the present invention.

### DESCRIPTION OF EMBODIMENTS

Embodiments of the present invention will be specifically described in the following with reference to, but not limited to, the examples.

### <Preparation of polyvinyl butyral>

A reactor equipped with a stirrer was charged with 2,700 mL of ion exchange water and 300 g of polyvinyl alcohol having an average degree of polymerization of 1,700 and a degree of saponification of 99.3 mol%, and the contents were heated with stirring to be dissolved, thereby preparing a solution. To the obtained solution was added as a catalyst 35% by weight hydrochloric acid such that the hydrochloric acid concentration was set to 0.2% by weight. The temperature of the mixture was adjusted to 15°C, and 21 g of n-butyraldehyde (n-BA) was added thereto with stirring. Then, 145 g of n-butyraldehyde (n-BA) was further added, so that a polyvinyl butyral resin in the form of white particles was precipitated. Fifteen minutes after the precipitation, 35% by weight hydrochloric acid was added such that the hydrochloric acid concentration was set to 1.8% by weight. The mixture was heated to 50°C and aged at 50°C for two hours. After cooling and neutralization of the solution, the polyvinyl butyral resin was washed with water and then dried, thereby preparing polyvinyl butyral 1 (PVB 1).

The obtained PVB 1 had an average degree of polymerization of 1,700, a hydroxy group content of 31.3 mol%, an acetyl group content of 0.7 mol%, and a degree of butyralization (Bu degree) of 68.0 mol%.

Further, polyvinyl butyral 2 (PVB 2) and polyvinyl butyral 3 (PVB 3) were prepared by selecting the type of polyvinyl alcohol as a raw material and setting the conditions for butyralization.

Table 1 shows each polyvinyl butyral obtained.

**[Table 1]**

| | PVB1 | PVB2 | PVB3 |
|---|---|---|---|
| Hydroxy group content (mol%) | 31.3 | 31.3 | 31.3 |
| Butyralization degree (mol%) | 68.0 | 68.0 | 68.0 |
| Acetyl group content (mol%) | 0.7 | 0.7 | 0.7 |
| Average degree of polymerization | 1700 | 850 | 650 |

### (Example 1)

To 100 parts by weight of PVB 1 was added 20 parts by weight of triethylene glycol-di-2-ethylhexanoate (3GO) as a plasticizer, and the mixture was sufficiently kneaded, thereby preparing an interlayer filling material for a touch panel.

The obtained interlayer filling material for a touch panel was pressed between mold release-treated surfaces of mold release polyethylene terephthalate (PET) films each with a thickness of 50 µm under the conditions of 120°C and 10 MP to have a thickness of 800 µm, and further pressurized with a press machine under the conditions of 20°C and 10 MPa to be cooled. Thus, an evaluation sample having a mold release PET film attached to each surface was obtained.

The storage modulus G' (20°C), storage modulus G' (70°C), and loss tangent tanδ (25°C) of the evaluation sample were measured using a dynamic viscoelastometer (DVA-200 available from IT Measurement Co., Ltd.) under the condition that the temperature was lowered from 200°C to - 50°C at a temperature decreasing rate of 3°C/min and under the conditions of a frequency of 1 Hz and a strain of 1%.

### (Comparative Examples 1 to 3)

An interlayer filling material for a touch panel was prepared in the same manner as in Example 1 except that the type of the polyvinyl butyral and the amount of the plasticizer were changed as shown in Table 2. Using the obtained interlayer filling material for a touch panel, the storage modulus G' (20°C), storage modulus G' (70°C), and loss tangent tanδ (25°C) were measured

### (Example 2)

To 100 parts by weight of PVB 1 were added 30 parts by weight of triethylene glycol-di-2-ethylhexanoate (3GO) as a plasticizer and 10 parts by weight of trimethylolpropane triacrylate (TMPA) as a reactive diluent. The mixture was sufficiently stirred, thereby obtaining a mixture composition. The mixture composition was sufficiently mixed with benzophenone (BP) as a photopolymerization initiator in an amount of 1 part by weight relative to 100 parts by weight of the reactive diluent, thereby obtaining an interlayer filling material for a touch panel.

The obtained interlayer filling material for a touch panel was applied to a mold release-treated surface of a mold release polyethylene terephthalate (PET) film with a thickness of 50 µm to a thickness of 800 µm. On the obtained interlayer filling material layer was placed another mold release PET film in such a manner that the mold release-treated surface thereof was in contact with the interlayer filling material layer, thereby preparing a laminate. The resulting sheet was left to stand at 23°C for five days to give an evaluation sample having a mold release PET film attached to each surface.

The storage modulus G' (70°C) of the evaluation sample was measured using a dynamic viscoelastometer (DVA-200 available from IT Measurement Co., Ltd.) under the condition that the temperature was lowered from 200°C to - 50°C at a temperature decreasing rate of 3°C/min and under the conditions of a frequency of 1 Hz and a strain of 1%.

The evaluation sample was irradiated with light at a wavelength of 365 nm and a dose of 4,000 mJ/cm² using an ultra-high pressure mercury lamp.

The storage modulus G' (20°C) (after irradiation with light) and loss tangent tanδ (25°C) (after irradiation with light) of the evaluation sample before and after irradiation with light were measured using a dynamic viscoelastometer (DVA-200 available from IT Measurement Co., Ltd.) under the condition that the temperature was lowered from 200°C to -50°C at a temperature decreasing rate of 3°C/min and under the conditions of a frequency of 1 Hz and a strain of 1%.

### (Examples 3 to 8)

An interlayer filling material for a touch panel was prepared in the same manner as in Example 2 except that the composition was set as shown in Table 2, and the storage modulus G' (70°C) (before irradiation with light), storage modulus G' (20°C) (after irradiation with light), and loss tangent tanδ (25°C) (after irradiation with light) were measured.

### (Comparative Example 4)

### (1) Preparation of an acrylic copolymer

An amount of 43.0 parts by weight of n-butyl acrylate, 14.5 parts by weight of methyl methacrylate, 39.0 parts by weight of ethyl acrylate, 10.5 part by weight of hydroxy ethyl acrylate, 3.0 parts by weight of acrylic acid, and 0.2 parts by weight of 2,2'-azobisisobutyronitrile as a polymerization initiator were dissolved in 100 parts by weight of ethyl acetate in a reaction vessel equipped with a stirrer, a reflux condenser, a thermometer, and a nitrogen gas inlet. After the air inside the reaction vessel was substituted with nitrogen, the solution was polymerized at 80°C for eight hours to give an acrylic copolymer.

The obtained acrylic copolymer was diluted with tetrahydrofuran (THF) by a factor of 50 times. The resulting diluted solution was passed through a filter (material: polytetrafluoroethylene, pore size: 0.2 µm) to prepare a measurement sample. The obtained measurement sample was placed in a gel permeation chromatograph (produced by Waters, 2690 Separations Model) and subjected to GPC measurement under the conditions of a sample flow rate of 1 ml/min and a column temperature of 40°C. The molecular weight of the acrylic copolymer in terms of polystyrene was thus determined. Based on the measurement result, the weight average molecular weight (Mw) was obtained. The obtained acrylic copolymer had a weight average molecular weight of 600,000.

The column used was GPC LF-804 (Showa Denko K.K.) and the detector used was a differential refractometer.

### (2) Preparation of an interlayer filling material for a touch panel

An amount of 100 parts by weight of the obtained acrylic copolymer was diluted with ethyl acetate to give an adhesive solution with a resin solid content of 45%. An amount of 100 parts by weight of the adhesive solution was blended with 1 part by weight of an isocyanate crosslinking agent (produced by Nippon Polyurethane Industry Co., Ltd., Coronate L-45, solid content: 45%), stirred for 15 minutes, applied to a mold release-treated surface of a mold release PET film with a thickness of 50 µm to a dry thickness of 200 µm, and dried at 80°C for 15 minutes. On the obtained adhesive layer was placed another mold release PET film in such a manner that the mold release-treated surface thereof was in contact with the adhesive layer, thereby preparing a laminate. The resulting sheet was left to stand at 23°C for five days to give an interlayer filling material for a touch panel (thickness: 200 µm) having a mold release PET film attached to each surface.

The storage modulus G' (20°C), storage modulus G' (70°C), and loss tangent tanδ (25°C) of the obtained interlayer filling material for a touch panel were measured in the same manner as in Example 1.

### (Evaluation)

The interlayer filling materials for a touch panel obtained in the examples and comparative examples were evaluated by the following methods. Table 2 shows the results.

In Table 2, the number of parts of the photopolymerization initiator is a value relative to 100 parts by weight of the reactive diluent.

### (1) Evaluation of adhesiveness

The interlayer filling material for a touch panel was cut to a size of 25 mm × 100 mm and attached to glass. A plasma-treated polyethylene terephthalate (PET) film (25 mm × 100 mm) was attached thereto and the laminate was vacuum-laminated at 25°C, followed by pressure bonding with heat in an autoclave at 75°C and 0.5 MPa for 30 minutes. An evaluation sample was thus prepared.

The obtained evaluation sample was subjected to 180° peel test at 300 mm/min in conformity with JIS K 6854:1994. The case where the peel strength was 5 N/25 mm or more was rated "o (Good)" and the case where the peel strength was less than 5 N/25 mm was rated "x (Poor)".

### (2) Evaluation of followability to steps

A single-sided adhesive tape in the shape of a square frame (outer frame: 76 mm × 52 mm, inner frame: 56 mm × 32 mm, thickness: 25 µm) was attached to a white plate glass (S9112 available from Matsunami Glass Ind., Ltd., size: 76 mm × 52 mm, thickness: 1.0 to 1.2 mm) to form a step.

The interlayer filling material for a touch panel was cut to a size of 76 mm × 52 mm and attached to the surface with a square frame-shaped step of the white plate glass. An ITO-coated polyethylene terephthalate film (ITO-PET available from Sekisui Nano Coat Technology) was cut to a size of 76 mm × 52 mm and attached to the interlayer filling material for a touch panel. They were each attached in such a manner that entering of bubbles was avoided as far as possible.

The resulting structure was preliminarily pressure-bonded under heating at 70°C at 1 atm for 30 minutes in a vacuum laminator, heated in an autoclave at 70°C and 0.5 MPa for 30 minutes, and decompressed after being cooled to 30°C or lower. Thus, a laminate having a glass and an ITO-PET film with an interlayer space therebetween filled with the interlayer filling material for a touch panel was prepared.

The obtained laminate was observed using a digital microscope (Keyence Corporation). The case where no bubbles were observed at the step was rated "o (Good)" and the case where bubbles were observed at the step was rated "x (Poor)".

### (3) Evaluation of impact resistance

The interlayer filling material for a touch panel was applied to a tempered glass sheet with a size of 10 cm × 7.0 cm and a thickness of 0.7 mm. To the other surface of the interlayer filling material for a touch panel was attached a corona-treated polycarbonate sheet with a size of 10 cm × 7.0 cm and a thickness of 3 mm, thereby preparing a tempered glass/interlayer filling material for a touch panel/polycarbonate laminate. This laminate was treated in an autoclave at 75°C and 0.5 MPa for 30 minutes.

The laminates obtained using the interlayer filling materials of Examples 2 to 8 were irradiated with light having a wavelength of 365 nm at a dose of 4,000 mJ/cm² using an ultra-high pressure mercury lamp.

The obtained laminate was fixed in a stainless-steel frame (inner size: 60 cm × 90 cm), and an iron ball (130 g) was dropped to the central portion of the laminate from the height of 100 cm in an environment of 23°C. The laminate having no cracks after the dropping was rated "o (Good)" and the laminate having cracks after the dropping was rated "× (Poor)".

**[Table 2] Part I**

| | | Example 1 | Example 2 | Example 3 | Example 4 | Example 5 | Example 6 | Example 7 | Example 8 |
|---|---|---|---|---|---|---|---|---|---|
| Polyvinyl acetal | Type | PVB1 | PVB1 | PVB1 | PVB2 | PVB2 | PVB2 | PVB2 | PVB3 |
| | Degree of polymerization | 1700 | 1700 | 1700 | 850 | 850 | 850 | 850 | 650 |
| | Number of parts (parts by weight) | 100 | 100 | 100 | 100 | 100 | 100 | 100 | 100 |
| Plasticizer | Type | 3GO | 3GO | 3GO | 3GO | 3GO | 3GO | 3GO | 3GO |
| | Number of parts (parts by weight) | 20 | 30 | 30 | 20 | 18 | 13 | 6 | 18 |
| Reactive diluent | Type | - | TMPA | TMPA | TMPA | TMPA | TMPA | TMPA | TMPA |
| | Number of parts (parts by weight) | - | 10.0 | 30 | 6.0 | 8.0 | 4.0 | 2.0 | 6.0 |
| Photopolyme rization initiator | Type | - | BP | BP | BP | BP | BP | BP | BP |
| | Number of parts (parts by weight) | - | 1 | 1 | 1 | 1 | 1 | 1 | 1 |
| Storage modulus (Pa) | G' (20°C) | 5.9×10⁷ | - | - | - | - | - | - | - |
| | G' (20°C) (after irradiation with light) | - | 44×10⁷ | 4.2×10⁷ | 6.9×10⁷ | 9.3×10⁷ | 2.7×10⁷ | 6.0×10⁷ | 5.3×10⁷ |
| | G' (70°C) | 7.3×10⁵ | 3.9×10⁵ | 2.6×10⁵ | 3.9×10⁵ | 4.0×10⁵ | 5.2×10⁵ | 7.1×10⁵ | 3.8×10⁵ |
| | tan *δ* (25°C) | 0.13 | - | - | - | - | - | - | - |
| | tan *δ* (25°C) (after irradiation with light) | - | 0.36 | 0.35 | 0.14 | 0.14 | 0.13 | 0.06 | 0.13 |
| Evaluation | Adhesiveness | ○ | ○ | ○ | ○ | ○ | ○ | ○ | ○ |
| | Followability to steps | ○ | ○ | ○ | ○ | ○ | ○ | ○ | ○ |
| | Impact resistance | ○ | ○ | ○ | ○ | ○ | ○ | ○ | ○ |

| | | | | | | | | | |
|---|---|---|---|---|---|---|---|---|---|
| * Number of parts of photopolymerization initiator is a value relative to 100 parts by weight of reactive diluent | | | | | | | | | |

**[Table 2] Part II**

| | | Comparative Example 1 | Comparative Example 2 | Comparative Example 3 | Comparative Example 4 |
|---|---|---|---|---|---|
| Polyvinyl acetal | Type | PVB1 | PVB2 | PVB1 | Acrylic copolymer |
| | Degree of poymerization | 1700 | 850 | 1700 | |
| | Number of parts (parts by weight) | 100 | 100 | 100 | |
| Plasticizer | Type | 3GO | 3GO | 3GO | |
| | Number of parts (parts by weight) | 45 | 35 | 0.5 | |
| Reactive diluent | Type | - | - | - | |
| | Number of parts (parts by weight) | - | - | - | |
| Photo polymerization initiator | Type | - | - | - | |
| | Number of parts (parts by weight) | - | - | - | |
| Storage modulus (Pa) | G' (20° C) | 4.9×10⁶ | 9.8 × 10⁶ | 9.3×10⁸ | 1.88×10⁵ |
| | G' (20°C) (after irradiation with light) | - | - | - | - |
| | G' (70°C) | 2.0× 10⁵ | 1.3×10⁵ | 7.9 × 10⁸ | 1.25×10⁴ |
| | tan *δ* (25°C) | 0.63 | 0.61 | 0.01 | 1.23 |
| | tan *δ* (25°C) (after irradiation with light) | - | - | - | - |
| Evaluation | Adhesiveness | ○ | ○ | ○ | ○ |
| | Followability to steps | O | ○ | × | ○ |
| | Impact resistance | × | × | ○ | × |

| | | | | | |
|---|---|---|---|---|---|
| * Number of parts of photopolymerization initiator is a value relative to 100 parts by weight of reactive diluent | | | | | |

### INDUSTRIAL APPLICABILITY

The present invention can provide an interlayer filling material for a touch panel which is used for filling an interlayer space between a touch panel and another component or an interlayer space between transparent conductive films included in the touch panel in production of a personal digital assistant, is excellent in followability to steps, and enables production of a touch panel laminate that is less likely to suffer cracks or breakage in a surface protection panel or a glass substrate. The present invention can also provide a touch panel laminate produced using the interlayer filling material for a touch panel.

### REFERENCE SIGNS LIST

1: Interlayer filling material for a touch panel of the present invention
2: Touch panel
3: Surface protection panel
4: Polarizing film
5: Decorative printing portion

## Claims

1. An interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film,
the interlayer filling material comprising: a polyvinyl acetal; and a plasticizer,
the interlayer filling material having a storage modulus G' (20°C) at 20°C of 1 × 10⁷ Pa or higher and a storage modulus G' (70°C) at 70°C of 3 × 10⁶ Pa or lower.

2. The interlayer filling material for a touch panel according to claim 1,
wherein a loss tangent tanδ (25°C) at 25°C is 0.6 or lower.

3. The interlayer filling material for a touch panel according to claim 1 or 2,
wherein the polyvinyl acetal is polyvinyl butyral.

4. The interlayer filling material for a touch panel according to claim 1, 2, or 3,
wherein the amount of the plasticizer relative to 100 parts by weight of the polyvinyl acetal is 1 to 30 parts by weight.

5. The interlayer filling material for a touch panel according to claim 1, 2, 3, or 4, further comprising:
a reactive diluent; and
a photopolymerization initiator.

6. The interlayer filling material for a touch panel according to claim 5,
wherein the reactive diluent is a (meth)acrylic reactive diluent, an epoxy reactive diluent, or a silicone reactive diluent.

7. The interlayer filling material for a touch panel according to claim 5 or 6,
wherein the amount of the reactive diluent relative to 100 parts by weight of the polyvinyl acetal is 0.1 to 30 parts by weight.

8. A touch panel laminate comprising:
a touch panel comprising transparent conductive films; and
the interlayer filling material for a touch panel according to claim 1, 2, 3, 4, 5, 6, or 7,
the interlayer filling material for a touch panel filling at least one interlayer space selected from the group consisting of an interlayer space between a surface protection panel and the touch panel, an interlayer space between the touch panel and a polarizing film, and interlayer spaces included in the touch panel between transparent conducive films, between a glass sheet and one of the transparent conducive films, between a glass sheet and another glass sheet, between a glass sheet and a polarizing film, between a substrate and a glass sheet, between a substrate and one of the transparent conducive films, and between a substrate and a polarizing film.
